# EUROPÄISCHE PATENTSCHRIFT

(11) **EP 1 328 483 B1**
(45) Veröffentlichungstag und Bekanntmachung des Hinweises auf die Patenterteilung: **28.12.2005**
(21) Anmeldenummer: 01978430.5
(22) Anmeldetag: 17.10.2001
(51) Int. Cl.: C03C 1/00, C03C 17/00

(54) **THERMISCH VORGESPANNTES GLAS MIT EINER ABRIEBFESTEN, PORÖSEN Si02-ANTIREFLEXSCHICHT**
THERMALLY TEMPERED GLASS COMPRISING A NON-ABRASIVE, POROUS, SIO2 ANTIREFLECTION LAYER
VERRE TREMPE THERMIQUEMENT POURVU D'UNE COUCHE ANTIREFLET EN SIO2, POREUSE ET RESISTANTE A L'USURE

(30) Priorität: 18.10.2000 DE 10051724
(43) Veröffentlichungstag der Anmeldung: 23.07.2003
(73) Patentinhaber: Flabeg Solarglas GmbH & Co. KG, 90766 Fürth (DE)
(72) Erfinder: BECKER, Hans-Joachim, 91459 Markt Erlbach (DE); DAUWALTER, Armin, 90766 Fürth (DE); GOMBERT, Andreas, 79100 Freiburg (DE); GLAUBITT, Walther, 92276 Margetshöchheim (DE); HOFMANN, Thomas, 90763 Fürth (DE); KURSAWE, Monika, 64342 Seeheim-Jugenheim (DE)
(74) Vertreter: Tergau & Pohl Patentanwälte
(86) Internationale Anmeldenummer: PCT/EP2001/012021
(87) Internationale Veröffentlichungsnummer: WO 2002/032823

(56) Entgegenhaltungen:
- EP-A- 0 835 849
- EP-A- 0 897 898
- WO-A-00/64830
- GLAUBITT W ET AL: "High transmission float glass for solar applications" GLASS SCIENCE AND TECHNOLOGY, JUNE 2000, VERLAG DER DEUTSCHEN GLASTECHNISCHEN GESELLSCHAFT, GERMANY, Bd. 73, Nr. 6, Seiten 193-195, XP000936294 ISSN: 0946-7475
- GOMBERT A ET AL: "Subwavelength-structured antireflective surfaces on glass" THIN SOLID FILMS, ELSEVIER-SEQUOIA S.A. LAUSANNE, CH, Bd. 351, Nr. 1-2, 30. August 1999 (1999-08-30), Seiten 73-78, XP004183069 ISSN: 0040-6090
- GOMBERT A ET AL: "Glazing with very high solar transmittance" SOLAR ENERGY, PERGAMON PRESS. OXFORD, GB, Bd. 62, Nr. 3, 1. März 1998 (1998-03-01), Seiten 177-188, XP004122620 ISSN: 0038-092X
- GOMBERT A ET AL: "Antireflective transparent covers for solar devices" SOLAR ENERGY, PERGAMON PRESS. OXFORD, GB, Bd. 68, Nr. 4, 2000, Seiten 357-360, XP004210275 ISSN: 0038-092X

## Beschreibung

Die Erfindung betrifft ein thermisch vorgespanntes, mit einer porösen SiO₂-Antireflexschicht versehenes Sicherheitsglas sowie ein Verfahren zu dessen Herstellung.

Eine derartige poröse SiO₂-Antireflexionsbeschichtung führt zu einer Transmissionserhöhung über den gesamten Bereich des Sonnenspektrums und verringert somit auch unerwünschte Reflexionen. Ein solches Sicherheitsglas eignet sich somit besonders für solare Anwendungen, z. B. für Abdeckungen von Sonnenkollektoren und von photovoltaischen Zellen. Es kann aber auch in anderen Bereichen, wie z. B. als Kfz-Windschutzscheibe oder als Fenster- und Bauverglasung, eingesetzt werden.

Beim Durchgang von Licht durch die Grenzfläche zweier Medien mit unterschiedlichen Brechungsindices wird ein Teil der Strahlung reflektiert. Beim senkrechten Einfall von Licht auf eine Glasscheibe mit einem Brechungsindex n = 1,5 beträgt der reflektierte Anteil beim Eintritt ins Glas ca. 4 %. Der gleiche Anteil wird auch beim Austritt des Lichts aus dem Glas reflektiert. Fällt das Licht schräg auf die Grenzfläche, wird in der Regel ein weitaus größerer Anteil reflektiert. Diese Verluste führen zu einer Verringerung des Wirkungsgrades von solaren Systemen, wie etwa photovoltaische Zellen oder Sonnenkollektoren, die standardmäßig mit Glas-Abdeckungen versehen sind.

Gängige industrielle Verfahren zur Entspiegelung von Glas nutzen das Prinzip der Interferenz. Dabei werden abwechselnd zwei oder mehr Schichten hoch- und niedrigbrechender Materialien übereinander aufgebracht. In einem bestimmten Wellenlängenbereich löschen sich dann die an den einzelnen Grezflächen reflektierten Wellen aus. Dieser Effekt kehrt sich bei Wellenlängen, die doppelt so groß sind wie die Design-Wellenlängen, in eine erhöhte Reflexion um. Die Bandbreite der Entspiegelung ist physikalisch auf maximal eine Oktave begrenzt und somit sind derartige Systeme für Anwendungen im solaren Bereich aufgrund des breitbandigen Sonnenspektrums nicht geeignet.

Die technische Lösung hierfür bietet ein bereits seit langem bekanntes physikalisches Prinzip, das ebenfalls auf Interferenzeffekten beruht, jedoch die erforderlichen, niedrigen Brechzahlen der Beschichtung durch Verdünnung eines Beschichtungsmaterials mit Luft realisiert. Diese Einfachschichten führen zu einer sehr guten Antireflex-Wirkung, wenn deren Brechzahl der Wurzel des Wertes für das Glassubstrat entspricht. Wird z. B. auf Glas mit n = 1,5 eine Schicht der Dicke λ/4 aufgebracht, so kommt es zu einer destruktiven Interferenz, d. h. zu einer Auslöschung der reflektierten Anteile des Phasenübergangs Luft/Schicht und des Phasenübergangs Schicht/Glas. Für die optimale Entspiegelung von Glas muss der Brechungsindex 1,22 betragen, um bei der Wellenlänge λ eine Reflexion von nahezu Null zu erreichen. Dieser niedrige Brechungsindex ist mit dichten Schichten nicht erzielbar.

Mit der Entwicklung von porösen Einfachschichten auf Glas, die eine so niedrige Brechzahl aufweisen, beschäftigte man sich bereits in den 50iger Jahren. Die seither beschriebenen Methoden umfassen das direkte Ätzen von Glas, das Aufbringen poröser Schichten, sowie eine Kombination beider, d. h. nachträgliches Ätzen von Schichten geringer Porösität.

Poröse Schichten, die durch Ätzen von Glas hergestellt werden, zeichnen sich im Prinzip durch sehr gute optische Resultate aus. Hierfür eignen sich insbesondere Gläser, die eine Phasenseparation eingehen, wie z. B. Borosilicat-Glas (US 4,019,884). Nachteilig ist bei dieser Technik die Verwendung umweltschädlicher Säuren, wie z. B. Flusssäure, sowie die mangelnde Homogenität der Schichten.

Aus der US 4,535,026 ist außerdem das nachträgliche Ätzen von Gläsern bekannt, die zuvor mit einer porösen SiO₂-Schicht versehen werden. Die hierfür verwendete Beschichtungslösung wird durch Umsetzung von Siliziumalkoxid mit Wasser und einem Katalysator in Alkohol erhalten. Die getrocknete Gelschicht wird erhitzt, um organische Bestandteile zu entfernen und eine hinreichende Abriebstabilität der Schicht zu generieren. Erhalten wird eine poröse SiO₂-Schicht, wobei jedoch ein nachträglicher Ätzvorgang notwendig ist, um die Poren zu vergrößern. Schließlich kann mit diesem Verfahren eine Antireflexschicht mit 0,1% Restreflexion erhalten werden.

Die Herstellung einer Beschichtungslösung, mit der die Herstellung einer zweckmäßigerweise abriebfesten oder -stabilen, porösen SiO₂-Antireflexschicht gelingt, die nicht nachträglich geätzt werden muss, ist bislang nicht beschrieben worden. Es ist im Gegenteil ein allgemein akzeptiertes Vorgehen bei der Herstellung poröser Antireflex-schichten, die SiO₂-Gelschichten lediglich Temperaturen bis zu 500 °C auszusetzen, um die Porösität der Schicht zu erhalten und ein Zusammensintern der Schicht, verbunden mit dem Verkleinern des Porenvolumens, zu vermeiden. Damit würde die Brechzahl der Schicht ansteigen und sich die Wirkung der Antireflexschicht verschlechtern (Sol Gel Science, C. J. Brinker, G. W. Scherr, Academic Press 1990, S. 583). Die Temperaturbeaufschlagung der Gelschicht mit möglichst hohen Temperaturen ist jedoch notwendig, um über eine Vernetzung des Orthokieselsäure-Netzwerkes in der Schicht eine gute Abriebfestigkeit der Schicht zu erzielen. Cathro et al beschreiben in Solar Energy 32, 1984, S. 573, dass ausreichend wischfeste SiO₂Antireflex-schichten auf Glas nur durch Temperaturbeaufschlagung von mindestens 500 °C zu erhalten wären. Moulton et al weisen in der US 2,601,123 sogar darauf hin, dass die Temperatur bei dem Tempern der Gelschicht im Erweichungsbereich des Glases liegen sollte.

Für das thermische Härten oder Formgebungsprozesse von Glas sind Temperaturen von über 600 °C erforderlich. Dabei wird das Glas in seinen Erweichungszustand überführt und anschließend durch rasches Abblasen mit Luft abgeschreckt. Es werden bei diesem Vorgang Spannungszustände eingefroren, die zu einer Erhöhung der Bruchfesitgkeit und zu einem Bruchverhalten mit sehr kleinen und daher ungefährlichen Bruchstücken führen.

Wie bereits oben ausgeführt, ist aus dem Stand der Technik aber zu entnehmen, dass bei den Temperaturen, die für das thermische Vorspannen erforderlich sind, das SiO₂-Gerüst im allgemeinen sintert, der Brechungsindex steigt und die SiO₂-Schicht ihre antireflektiven Eigenschaften verliert. Auch thermisch bereits vorgespanntes Sicherheisglas lässt sich nicht mit einer abriebfesten Antireflex-Schicht ausrüsten, weil es nach der Beschichtung nicht auf Temperaturen von 500 °C erhitzt werden kann, ohne dass sich das Glas wieder entspannt und seine Eigenschaft als Sicherheitsglas verliert.

Der Erfindung liegt die Aufgabe zugrunde, ein thermisch vorgespanntes Glas oder Sicherheitsglas herzustellen, das mit einer abriebfesten Antireflex-Schicht versehen ist, deren Brechungsindex im Bereich von 1,25 bis 1,40 liegt. Des Weiteren soll ein Verfahren zur Herstellung eines derartigen Sicherheisglases bereitgestellt werden.

Die erstgenannte Aufgabe wird erfindungsgemäß gelöst durch die Merkmale des Anspruchs 1. Demnach ist ein thermisch gehärtetes, zweckmäßigerweise mit einer abriebfesten, porösen und vorzugsweise sinterstabilen SiO₂-Schicht versehenes Sicherheitsglas erhältlich durch Beschichten eines üblichen Kalk-Nutron-Glases mit einer wässrigen Beschichtungslösung, Trocknen des beschichteten Glases, thermisches Härten bei Temperaturen von mindestens 600°C für einige Minuten und thermisches Abschrecken des beschichteten Glases durch Abblasen mit Luft. Dabei weist die SiO₂-Schicht eine Brechzahl im Bereich von vorteilhafterweise 1,25 bis 1,38 auf, wobei die Restreflexion des beschichteten Glases oder der Scheibe kleiner als 3%, insbesondere ca. 1%, des gesamten Glases ist, während ein unbeschichtetes Glas eine Reflexion von ca. 8% aufweist.

Bezüglich des Verfahren zur Herstellung eines derartigen Sicherheitsglases wird die genannte Aufgabe gelöst durch die Merkmale des Anspruchs 2. Vorteilhafte Weiterbildungen sind Gegenstand der Unteransprüche 3 bis 5.

Dazu wird ein Glas, insbesondere ein übliches Kalk-Nutron-Glases, mit einer wässrigen Beschichtungslösung mit enem pH-Wert von 3 bis 8 beschichtet, enthaltend 0,5 bis 5,0 Gew.-% [SiOₓ(OH)_{y}]ₙ-Partikel mit einer Paritkelgröße von 10 bis 60 nm und ein Tensidgemisch, wobei 0<y<4 und 0<x<2 ist. Das beschichtete Glases wird durch Stehenlassen bei Raumtermperatur oder duch beschleunigtes Abtrocknen in einem Luftstrom getrocknet. Das getrocknete Glas wird bei Temperaturen von mindestens 600 °C für einen Zeitraum von 2 bis 10 Minuten getempert, und das erhitzte Glas wird im Luftstrom flächig gleichmäßig, beidseitig abgeschreckt zur Erzielung des Vorspanneffektes.

Die erfindungsgemäße Lösung ist für den Fachmann überraschend, weil aus dem Standardwerk der Sol-Gel-Technologie von C.J. Brinker und G.W. Scherer Sol-Gel Science, Academic Press 1990, Seite 104, Figur 5 bekannt ist, daß der PZC (point of zero charge) und IEP (isoelectric point) von SiO₂-Partikeln bei einem pH-Wert von 2 Null ist und damit die Stabilität des Sols am größten ist. Es war deshalb nicht zu erwarten, daß bei einem pH-Wert von größer 3 das Sol noch eine ausreichende Stabilität besitzt.

Es ist bekannt, daß die Eigenschaften von Materialien, die über Sol-Gel-Verfahren erhalten werden, sehr stark vom pH-Wert abhängig sind. Deshalb ist es überraschend, daß die abgeschiedene Schicht eine so hohe Festigkeit besitzt, denn aus Untersuchungen von Klimentova ist bekannt (Sol-Gel Science, Seite 389), daß der Elastizitätsmodul von Gelschichten am isoelektrischen Punkt der SiO₂-Partikel am größten ist. Auch aus diesem Grund hätte der Fachmann den pH-Wert des Sols auf 2 eingestellt. Zudem konnte eine deutlich erhöhte Abriebfestigkeit - etwa um den Faktor 10 - erreicht werden.

Gegenstand der Erfindung ist weiterhin die Verwendung des erfindungsgemäßen Sicherheitsglases für die Abdeckung von solaren Energiesystemen, für Kraftfahrzeugscheiben sowie Fenster- und Bauverglasungen.

Es können alle Glassorten verwendet werden, die üblicherweise zur Herstellung von thermisch vorgespanntem Sicherheisglas eingesetzt werden. Dabei finden überwiegend Kalk-Natron-Gläser Anwendung.

Die wässrige Beschichtungslösung hat einen pH-Wert von 3 bis 8 und enthält 0,5 bis 5,0 Gew.-% [SiOₓ(OH)_{y}]ₙ-Partikeln, wobei O<y<4 undO<x<2 ist, mit einer Partikelgröße von 10 bis 60 nm mit einer Toleranz von ± 10% und 0,005 bis 0,5 Gew.-% eines Tensidgemisches. Das Tensidgemisch besteht aus 15 Gew.-% bis 30 Gew.-% anionischen Tensiden, 5 Gew.-% bis 15 Gew.-% nichtionischen Tensiden und weniger als 5 Gew.-% amphoteren Tensiden.

Die Beschichtungslösung wir hergestellt durch:
- Zugabe eines Tetraalkosxysilans in ein wässrig-alkoholisch-ammoniakalisches Hydrolysegemisch bei Temperaturen zwischen 35°C und 80 °C;
- Abtrennung von Ammoniak und Alkohol aus der erhaltenen Dispersion durch Wasserdampfdestillation und Einstellung des pH-Wertes auf 3 bis 8; und
- Zugabe von 0,005 Gew.-% bis 0,5 Gew.-%, bezogen auf die Beschichtungslösung, eines Tensidgemisches aus 15 Gew.-% bis 30 Gew.-% anionischen Tensiden, 5 Gew.-% bis 15 Gew.-% nichtionischen Tensiden und weniger als 5 Gew.-% amphoteren Tensiden.

Die wässrige Beschichtungslösung ist gegenüber Gelierung innerhalb des bisherigen Beobachungzeitraumes von etwa 2 Jahren stabil. Die Partikel in der Beschichtungslösung besitzen Kugelform mit mittleren Teilchendurchmessern von 10 nm bis 60 nm, insbesondere 30 nm bis 40 nm, vorzugsweise 35 nm bei einer Toleranz von ± 10%.

Gegenüber dem aus DE 198 28 231 bekannten wässrigen Sol zeigt die erfindungsgemäße Beschichtungslösung einen deutlich geringeren Tyndall-Effekt, der ein Nachweis für eine geringe Agglomeration der Partikel in der Lösung ist. Die mit der Beschichtungslösung erhaltene poröse Schicht kann mit einer Brechzahl von 1,25 bis kleiner 1,40 eingestellt werden, so dass die Restreflexion einer beschichteten, eisenarmen Glasscheibe zwischen 0,3% und 3%, vorzugsweise zwischen 0,5% und 1%, liegt. Das Reflexionminimum kann durch die Schichtdicke im Bereich von 500 nm bis 800 nm leicht eingestellt werden.

Die Beschichtungslösung wird auf einen Feststoffgehalt von 0,5 Gew.-% bis 5 Gew.-% eingestellt. Der Feststoffgehalt ist abhängig von der Art des Beschichtungsverfahrens.

In einer besonderen Ausführung der erfindungsgemäßen Beschichtungslösungen werden 0,001 Gew.-% bis 0,1 Gew.-%, bezogen auf die Beschichtungslösung, eines geeigneten Konservierungsmittels zugesetzt.

In einer weiteren Ausführungsform werden der Beschichtungslösung Lösungsmittel, beispielsweise niedere Alkohole mit einer Kettenlänge von C1 - C4, Dichlormethan, Dioxan, Tetrahydrofuran, 2-Methoxy-1-propanol, 2-Butanon, Cyclohexanon oder Aceton, in einer Konzentration von 0,5 Gew.-% bis 50 Gew.-%, bezogen auf die Beschichtungslösung, zugesetzt. Vorzugsweise wird Ethanol in einer Konzentration von 15 Gew.-% bis 25 Gew.-% eingesetzt.

Die Beschichtungslösung wird in der nicht vorveröffentlichten Deutschen Patentanmeldung DE 100 51 725 beschrieben. Die Beschichtungslösung wird nach üblichen Verfahren auf das Glas aufgetragen. Geeignete Verfahren sind Tauchbeschichtung, Sprühverfahren oder Rotationsbeschichtungverfahren (spincoating). Bevorzugt ist das Auftragen mittels Tauchbeschichtung (dipcoting). Die Ziehgeschwindigkeiten bei Tauchverfahren liegen im Bereich von 0,5 cm/min bis 50 cm/min.

In Abhängigkeit von der erforderlichen Schichtdicke müssen die Parameter des Beschichtungsvorganges sowie die äußeren Bedingungen, wie Temperatur und Luftfeuchte, genau aufeinander abgestimmt sein. Das gehört aber zum Fachwissen eines Beschichtungsfachmannes.

Anschließend wird das beschichtete Glas durch einfaches Ablüften oder durch Abblasen mit Luft vorgetrocknet und dann auf Temperaturen von mindestens 600 °C erhitzt. Dadurch werden die organischen Bestandteile der Beschichtung entfernt, das Orthokieselsäure-Netzwerk gehärtet und das resultierende, poröse SiO₂-Gerüst erhält eine gute Haftung auf der Glasoberfläche. Anschließend wird das Glas durch Abblasen mit Luft thermisch abgeschreckt, so dass es die entsprechenden Eigenschaften als thermisch vorgespanntes Einscheibensicherheitsglas erhält (gemäß DIN 1249-12/prEN 12150).

Ein weiterer Vorteil des erfindungsgemäßen Verfahrens besteht darin, dass wisch- und abriebfeste Antireflex-Schichten bereits nach wenigen Minuten Temperung erhalten werden können.

Durch das erfindungsgemäße Verfahren kann nun erstmalig ein mit porösen Antireflex-schichten versehenes, thermisch vorgespanntes Sicherheitsglas hergestellt werden. Das erfindungsgemäße Sicherheitsglas findet z. B. Anwendung als Abdeckung von solaren Energiesystemen, wie Sonnenkollektoren und Photovoltaik-Zellen, um durch die erhöhte Transmission den effektiven Wirkungsgrad derartiger Systeme zu erhöhen.

Bei einer besonderen Ausführungsform des erfindungsgemäßen Verfahrens wird das mit einer porösen SiO₂-Gelschicht versehene Glas vor dem Härtungsprozess einer Zwischenbehandlung unterzogen. Dabei erfolgt ein Tauchprozess in einer wässrigen Lösung von anorganischen Salzen im Konzentrationsbereich von 0,1 Gew.-% bis 10 Gew.-% oder in reinem Wasser. Mit einer Ziehgeschwindigkeit von 1 cm/min bis 10 cm/min wird das Glas aus dem Tauchbad herausgezogen, auf übliche Weise getrocknet und bei 50°C bis 300 °C für 10 min bis 15 min getempert.

In einer weiteren Ausführungsform des erfindungsgemäßen Verfahrens wird das beschichtete und erhitzte Glas vor dem thermischen Abschrecken einem Formgebungsprozess unterzogen. So kann das beschichtete und erhitzte Glas vor dem Abschrecken z. B. gebogen werden. Auf diese Weise sind gebogene Gläser, z. B. für Anwendungen als Kfz-Windschutzscheibe, erhältlich.

Nachfolgend wird anhand von Ausführungsbeispielen das erfindungsgemäße Verfahren näher erläutert.

### Beispiel 1:

Es wird ein Hydrolysegemisch, bestehend aus 4,9 I Wasser, 9,6 l Ethanol und 250 g 25%igem Ammoniak, bereitet. Zu diesem auf 70 °C temperierten Hydrolysegemisch gibt man bei intensiver Durchmischung in einer Portion 1250g von gleichermaßen temperiertem Tetraethoxysilan. Man erhält ein SiO₂-Sol mit mittleren Teilchendurchmessern von 25 nm bei einer Toleranz von ± 10%.

Anschließend wird das Reaktiongemisch einer Wasserdampfdestillation unterzogen, um Alkohol und Ammoniak zu entfernen. Das erhaltene wässrige SiO₂-Sol wird auf einen pH-Wert von 8 eingestellt und mit 0,2 Gew.-% eines Tensidgemisches, bestehend aus 10,0 Gew.-% Fettalkoholethersulfat (C12/C14-Fettalkohol, 2 Mol EO), 5,6 Gew.-% Alkylbenzolsulfonat, 5,5 Gew.-% Fettalkoholethoxilat und 8,9% Wasser, versetzt.

### Beispiel 2:

In die Beschichtungslösung aus Beispiel 1 wird eine zuvor mit entmineralisiertem Wasser gereinigte und anschließend getrocknete Glasscheibe mit den Abmessungen 1 m x 1 m und einer Dicke von 4 mm eingetaucht und mit einer konstanten Ziehgeschwindigkeit von 10 cm/min herausgezogen. Anschließend wird die Beschichtung bei Raumtemperatur getrocknet, entweder durch einfaches Stehenlassen und Ablüften oder durch Abblasen mit Luft, bevor sie aus der Beschichtungsapparatur genommen und anschießend getempert und vorgespannt wird. Dabei wird die beschichtete Glasscheibe auf einer horizontalen Vorspannanlage in den auf 700 °C temperierten Ofenbereich eingebracht und für 160 Sekunden erwärmt.

Anschließend erfolgt ein thermisches Abschrecken in einer Luftdusche für 120 Sekunden. Man erhält so Sicherheitsglas, das mit einer Antireflex-Schicht ausgerüstet ist. Bei Verwendung von eisenarmen Gläsern wird eine solare Transmission von 95% erreicht im Vergleich zu 90% bei unbeschichtetem Glas.

## Patentansprüche

1. Thermisch gehärtetes, mit einer porösen SiO₂-Schicht versehenes Sicherheitsglas, wobei die SiO₂-Schicht eine Brechzahl im Bereich von 1,25 bis 1,40, vorzugsweise 1,25 bis 1,38, aufweist, erhalten durch Beschichten eines üblichen Kalk-Natron-Glases mit einer wässrigen Beschichtungslösung mit einem pH-Wert von 3 bis 8, insbesondere 5 bis 8, enthaltend 0,5 Gew.-% bis 5,0 Gew.-% [SiOₓ(OH)_{y}]ₙ-Partikeln, wobei O<y<4 und O<x<2 ist, mit einer Partikelgröße von 10 nm bis 60 nm und ein Tensidgemisch, Trocknen des beschichteten Glases, thermisches Härten bei Temperaturen von mindestens 600 °C für einige Minuten und thermisches Abschrecken des beschichteten Glases durch Abblasen mit Luft.

2. Verfahren zur Herstellung eines Sicherheitsglases nach Anspruch 1 durch
- Beschichten eines üblichen Kalk-Natron-Glases mit einer wässrigen Beschichtungslösung mit einem pH-Wert von 3 bis 8, enthaltend 0,5 bis 5,0 Gew.-% [Si-Oₓ(OH)_{y}]ₙ-Parikeln, wobei O<y<4 und O<x<2 ist, mit einer Partikelgröße von 10 bis 60 nm und ein Tensidgemisch,
- Trocknen des beschichteten Glases durch Stehenlassen bei Raumtemperatur oder durch beschleunigtes Abtrocknen in einem Luftstrom,
- Tempern des getrockneten Glases bei Temperaturen von mindestens 600 °C für einen Zeitraum von 2 bis 10 Minuten, und
- flächig gleichmäßiges, beidseitiges Abschrecken des erhitzten Glases im Luftstrom zur Erzielung des Vorspanneffektes.

3. Verfahren nach Anspruch 2, worin das beschichtete Glas vor dem Härtungsprozess einer Zwischenbehandlung unterzogen wird.

4. Verfahren nach Anspruch 3, worin das beschichtete Glas in eine wässrige Lösung anorganischer Salze oder in reines Wasser getaucht und anschließend bei 50 bis 300 °C getempert wird.

5. Verfahren nach einem der Ansprüche 2 bis 4, worin das beschichtete und erhitzte Glas vor dem thermischen Abschrecken einem Formgebungsprozess unterzogen wird.

6. Verwendung des mit einer Antireflexionsbeschichtung versehenes Sicherheitsglases nach Anspruch 1 für Abdeckungen von Sonnenkollektoren, für photovoltaische Zellen, für Windschutzscheiben von Kraftfahrzeugen und/oder für Bauverglasungen.

## Claims

1. Thermally toughened safety glass provided with a porous SiO₂ layer, the SiO₂ layer having a refractive index in the range from 1.25 to 1.40, preferably 1.25 to 1.38, obtained by coating a standard soda-lime glass with an aqueous coating solution with a pH from 3 to 8, in particular 5 to 8, containing 0.5% by weight to 5.0% by weight of [SiOₓ(OH)_{y}]ₙ particles, where 0<y<4 and O<x<2, with a particle size of from 10 nm to 60 nm, and a surfactant mixture, drying the coated glass, thermal toughening at temperatures of at least 600°C for a few minutes and thermal quenching of the coated glass by blowing air onto it.

2. Process for producing a safety glass according to Claim 1 by
- coating a standard soda-lime glass with an aqueous coating solution with a pH of from 3 to 8, containing 0.5 to 5.0% by weight of [SiOₓ(OH)_{y}]ₙ particles, where 0<y<4 and 0<x<2, with a particle size of from 10 to 60 nm, and a surfactant mixture,
- drying the coated glass by leaving it to stand at room temperature or by accelerated drying in an airstream,
- heating the dried glass at temperatures of at least 600°C for a period of from 2 to 10 minutes, and
- uniformly surface-quenching both sides of the heated glass in an airstream to produce the tempering effect.

3. Process according to Claim 2, in which the coated glass is subjected to an intermediate treatment prior to the toughening process.

4. Process according to Claim 3, in which the coated glass is dipped into an aqueous solution of inorganic salts or into pure water and is then heated at from 50 to 300°C.

5. Process according to one of Claims 2 to 4, in which the coated and heated glass is subjected to a shaping process prior to the thermal quenching.

6. Use of the safety glass provided with an antireflection coating according to Claim 1 for covers of solar collectors, for photovoltaic cells, for windscreens of motor vehicles and/or for structural glazing.

## Revendications

1. Verre de sécurité trempé thermiquement, pourvu d'une couche poreuse en SiO₂, la couche en SiO₂ ayant un indice de réfraction de l'ordre de 1,25 à 1,40, de préférence de 1,25 à 1,38, obtenu en revêtant un verre habituel à base de soude et de chaux d'une solution aqueuse de revêtement ayant un pH de 3 à 8, notamment de 5 à 8, contenant de 0,5 % en poids à 5,0 % en poids de particules de [SiOₓ(OH)_{y}]ₙ, formule dans laquelle O<y<4 et O<x<2, ayant une dimension de particule de 10 nm à 60 nm et un mélange d'agents tensioactifs, en séchant le verre revêtu, en le durcissant thermiquement à des températures d'au moins 600°C pendant quelques minutes et en trempant thermiquement le verre revêtu par insufflation d'air.

2. Procédé de production d'un verre de sécurité suivant la revendication 1, dans lequel
- on revêt un verre habituel à la chaux et à la soude d'une solution aqueuse de revêtement ayant un pH de 3 à 8, contenant de 0,5 à 5,0 % en poids de particules de [SiOₓ(OH)_{y}]ₙ, formule dans laquelle O<y<4 et O<x<2, ayant une dimension de particule de 10 à 60 nm et un mélange de tensioactifs,
- on sèche le verre revêtu en l'abandonnant à la température ambiante ou par séchage accéléré dans un courant d'air,
- on met en température le verre séché à des températures d'au moins 600°C pendant un laps de temps de 2 à 10 minutes et
- on trempe uniformément en surface des deux côtés le verre chauffé dans le courant d'air pour obtenir l'effet de trempe.

3. Procédé suivant la revendication 2, dans lequel on soumet le verre revêtu à un traitement intermédiaire avant l'opération de durcissement.

4. Procédé suivant la revendication 3, dans lequel on immerge le verre revêtu dans une solution aqueuse de sels minéraux ou dans de l'eau pure et on le met en température ensuite entre 50 et 300°C.

5. Procédé suivant l'une des revendications 2 à 4, dans lequel on soumet le verre revêtu et chauffé à une opération de façonnage avant la trempe thermique.

6. Utilisation du verre de sécurité pourvu d'un revêtement antireflet suivant la revendication 1 pour des couvertures de collecteurs solaires, pour des cellules photovoltaïques, pour des vitres de pare-brise de véhicules automobiles et/ou pour des vitrages de bâtiment.
